(19) Europäisches Patentamt
European Patent Office
Office européen des brevets

(11) **EP 4 765 224 A1**

(12) **EUROPEAN PATENT APPLICATION**
published in accordance with Art. 153(4) EPC

(43) Date of publication:
**24.06.2026 Bulletin 2026/26**

(21) Application number: **24908164.7**

(22) Date of filing: **20.12.2024**

(51) International Patent Classification (IPC):
*H01M 4/131* (2010.01)      *H01M 4/505* (2010.01)
*H01M 4/525* (2010.01)      *H01M 10/054* (2010.01)
*H01M 4/02* (2006.01)

(52) Cooperative Patent Classification (CPC):
**H01M 4/02; H01M 4/131; H01M 4/505;**
**H01M 4/525; H01M 10/054;** Y02E 60/10

(86) International application number:
**PCT/KR2024/020837**

(87) International publication number:
**WO 2025/135882 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023   KR 20230187456**
**19.12.2024   KR 20240191928**

(71) Applicant: **LG Energy Solution, Ltd.**
**Seoul 07335 (KR)**

(72) Inventors:
• **KIM, Myeong Seong**
**Daejeon 34122 (KR)**
• **SONG, Myeong Jun**
**Daejeon 34122 (KR)**
• **LEE, Ho In**
**Daejeon 34122 (KR)**
• **HAH, Hoe Jin**
**Daejeon 34122 (KR)**

(74) Representative: **BCKIP Part mbB**
**Landsberger Straße 98**
**80339 München (DE)**

(54) **CATHODE FOR SODIUM SECONDARY BATTERY, AND SODIUM SECONDARY BATTERY COMPRISING SAME**

(57)    The present invention relates to a positive electrode for a sodium secondary battery, the positive electrode including a current collector, a first positive electrode active material layer disposed on the current collector, and a second positive electrode active material layer disposed on the first positive electrode active material layer, wherein the first positive electrode active material layer includes a first positive electrode active material, and the second positive electrode active material layer includes a second positive electrode active material, wherein the first positive electrode active material includes sodium composite transition metal oxide particles having an O3 octahedral crystal structure, and the second positive electrode active material includes sodium composite transition metal oxide particles having a P2 orthorhombic crystal structure, wherein a ratio of the average particle diameter ($D_{50}$) between the first positive electrode active material and the second positive electrode active material is 2:1 to 3:1.

FIG. 1

EP 4 765 224 A1

**Description**

**TECHNICAL FIELD**

**Cross-reference to Related Applications**

This application claims the benefit of priority from Korean Patent Application Nos. 10-2023-0187456, filed on December 20, 2023, and 10-2024-0191928, filed on December 19, 2024, in the Korean Intellectual Property Office, the disclosures of which are incorporated herein in their entirety by reference.

**Technical Field**

The present invention relates to a positive electrode for a sodium secondary battery and a sodium secondary battery including the positive electrode, and more specifically, to a positive electrode for a sodium secondary battery, the positive electrode including a current collector, a first positive electrode active material layer, and a second positive electrode active material layer, and a sodium secondary battery including the positive electrode.

**BACKGROUND ART**

A secondary battery is a battery which can be repeatedly used through a discharging process in which chemical energy is converted into electrical energy and a charging process which is performed in the reverse direction, and recently, the demand for the secondary battery is rapidly increasing with the recent commercialization of portable electronic products, electric vehicles, and the like. Currently, a lithium secondary battery is mainly used as a commercially available secondary battery, but lithium, which is the main raw material, has limited reserves, and thus, is expensive, and is not sufficiently available to meet the demand for secondary batteries. Therefore, there is a demand for the development of a new secondary battery capable of replacing the lithium secondary battery, and recently, research and development on a sodium secondary battery using sodium instead of lithium has been actively attempted.

However, since sodium ions are relatively larger than lithium ions, if sodium ions are used as a charge carrier, steric hindrance increases, and as a result, there is a problem in that rate properties are degraded when the sodium ions are applied to a secondary battery.

In order to solve the above-described problem, a O3-based layered oxide and a P2-based layered oxide are being developed. However, the O3-based layered oxide has a small interlayer distance, and thus, has a limitation in high rate properties, and has a problem in that lifespan properties are degraded due to a change in crystal structure during charging and discharging, and in the P2-based layered oxide, two types of sodium sites, $Na_e$ and $Na_f$, which have different degrees of repulsive force with a transition metal are present due to varying distances between a sodium layer and a transition metal layer depending on the location of a sodium site, and has a problem in that when passing through $Na_f$, which has a large repulsive force with the transition metal, the movement speed is reduced, so the effect of improving rate properties is not sufficient.

Therefore, in order to solve the above-described problems, there is a need for the development of a positive electrode for a sodium secondary battery, the positive electrode capable of implementing better capacity properties and rate properties.

**DISCLOSURE OF THE INVENTION**

**TECHNICAL PROBLEM**

In order to solve the above-described problems, an aspect of the present invention provides a positive electrode for a sodium secondary battery, the positive electrode including a first positive electrode active material, which includes sodium composite transition metal oxide particles having an O3 octahedral crystal structure, as a first positive electrode active material layer, and including a second positive electrode active material, which includes sodium composite transition metal oxide particles having a P2 orthorhombic crystal structure, as a second positive electrode active material layer, wherein a ratio of the average particle diameter ($D_{50}$) between the first positive electrode active material and the second positive electrode active material is 2:1 to 3:1.

In addition, another aspect of the present invention provides a sodium secondary battery including the above-described positive electrode for a sodium secondary battery.

## TECHNICAL SOLUTION

[1] The present invention provides a positive electrode for a sodium secondary battery, the positive electrode including a current collector, a first positive electrode active material layer disposed on the current collector, and a second positive electrode active material layer disposed on the first positive electrode active material layer, wherein the first positive electrode active material layer includes a first positive electrode active material, and the second positive electrode active material layer includes a second positive electrode active material, wherein the first positive electrode active material includes sodium composite transition metal oxide particles having an O3 octahedral crystal structure, and the second positive electrode active material includes sodium composite transition metal oxide particles having a P2 orthorhombic crystal structure, wherein a ratio of the average particle diameter ($D_{50}$) between the first positive electrode active material and the second positive electrode active material is 2:1 to 3:1.

[2] In the present invention, in [1] above, the sodium composite transition metal oxide particles having an O3 octahedral crystal structure may include a compound represented by Formula 1 below.

$$[\text{Formula 1}] \qquad Na_{x1}M^1O_2$$

In Formula 1 above, $0.7 \leq x1 \leq 1$, and $M^1$ may be one or more selected from the group consisting of Fe, Ni, Mn, Co, Mg, Zn, Cu, and Cr.

[3] In the present invention, in [2] above, the $M^1$ may include Fe, Ni, and Mn.

[4] In the present invention, in at least one among [1] to [3] above, the sodium composite transition metal oxide particles having a P2 orthorhombic crystal structure may include a compound represented by Formula 2 below.

$$[\text{Formula 2}] \qquad Na_{x2}M^2O_2$$

In Formula 2 above, the x2 may be $0 < x2 < 0.7$, and $M^2$ may be one or more selected from the group consisting of Fe, Ni, Mn, Co, Mg, Zn, Cu, and Cr.

[5] In the present invention, in [4] above, the $M^2$ may include Fe, Ni, and Mn.

[6] In the present invention, in at least one among [1] to [5] above, the first positive electrode active material may have an average particle diameter ($D_{50}$) of 8 $\mu$m to 13 $\mu$m.

[7] In the present invention, in at least one among [1] to [6] above, the second positive electrode active material may have an average particle diameter ($D_{50}$) of 2 $\mu$m to 8 $\mu$m.

[8] In the present invention, in at least one among [1] to [7] above, a weight ratio between the first positive electrode active material and the second positive electrode active material may be 70:30 to 99:1.

[9] In the present invention, in at least one among [1] to [8] above, the first positive electrode active material may have a specific surface area of 0.2 $m^2$/g to 0.7 $m^2$/g.

[10] In the present invention, in at least one among [1] to [9] above, the second positive electrode active material may have a specific surface area of 0.2 $m^2$/g to 0.7 $m^2$/g.

[11] In the present invention, in at least one among [1] to [10] above, a thickness ratio between the first positive electrode active material layer and the second positive electrode active material layer may be 1.2:1 to 6:1.

[12] In the present invention, in at least one among [1] to [11] above, the first positive electrode active material layer may have a thickness of 10 $\mu$m to 70 $\mu$m.

[13] In the present invention, in at least one among [1] to [12] above, the second positive electrode active material layer may have a thickness of 5 $\mu$m to 30 $\mu$m.

[14] In the present invention, in at least one among [1] to [13] above, a ratio of the loading amount between the first positive electrode active material layer and the second positive electrode active material layer may be 2:1 to 7:1.

[15] The present invention provides a sodium secondary battery including at least one positive electrode for a sodium secondary battery among [1] to [13] above.

## ADVANTAGEOUS EFFECTS

A positive electrode according to the present invention may include a current collector, a first positive electrode active material layer, and a second positive electrode active material layer which are sequentially stacked, wherein the first positive electrode active material layer includes a first positive electrode active material including sodium composite transition metal oxide particles having an O3 octahedral crystal structure, and the second positive electrode active material layer includes a second positive electrode active material including sodium composite transition metal oxide particles having a P2 orthorhombic crystal structure, and depending on the stacked structure of the first positive electrode active material layer and the second positive electrode active material layer and components respectively included therein, the positive electrode may have excellent capacity properties, rate properties, and lifespan performance.

Therefore, if the positive electrode for a sodium secondary battery according to the present invention is applied to a sodium secondary battery, excellent capacity properties and rate properties may be implemented.

## BRIEF DESCRIPTION OF THE DRAWINGS

The drawings attached herein illustrate preferred embodiments of the present invention by example, and serve to enable technical concepts of the present invention to be further understood together with detailed description of the invention given below, and therefore the present invention is interpreted only with matters in such drawings. Meanwhile, the shape, size, scale, or ratio of elements in the drawings included in the present specification may be exaggerated to emphasize a more clear description.

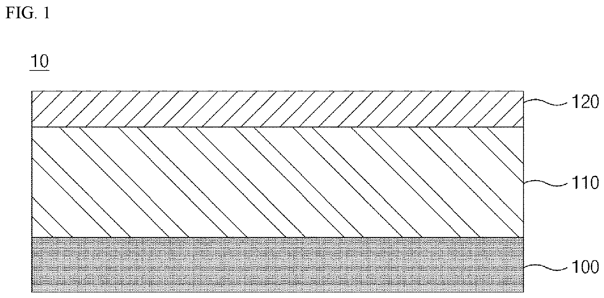

FIG. 1 is a schematic side view for describing a positive electrode for a sodium secondary battery according to an embodiment of the present invention.

## MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present invention, an average particle diameter ($D_{50}$) means a particle size based on 50% of a volume cumulative particle size distribution of powder to be measured, such as a first positive electrode active material and a second positive electrode active material. The average particle diameter ($D_{50}$) may be measured by a laser diffraction method. For example, the average particle diameter ($D_{50}$) may be measured by dispersing powder to be measured in a dispersion medium, and then introducing the mixture into a commercially available laser diffraction particle size measurement device (e.g., Microtrac MT 3000) to be irradiated with an ultrasonic wave of about 28 kHz at an output of 60 W, thereby obtaining a volume cumulative particle size distribution graph, and then obtaining a particle size corresponding to 50% of a cumulative volume.

In the present invention, a "specific surface area" is measured by a BET method, and specifically, may be calculated from the adsorption amount of nitrogen gas under a liquid nitrogen temperature (77K) using Belsorp-mino II of BEL Japan Co., Ltd.

## Positive electrode for sodium secondary battery

Hereinafter, a positive electrode for a sodium secondary battery according to the present invention will be described.

The positive electrode for a sodium secondary battery according to the present invention includes a current collector, a first positive electrode active material layer disposed on the current collector, and a second positive electrode active material layer disposed on the first positive electrode active material layer, wherein the first positive electrode active material layer includes a first positive electrode active material, and the second positive electrode active material layer includes a second positive electrode active material, wherein the first positive electrode active material includes sodium composite transition metal oxide particles having an 03 octahedral crystal structure, and the second positive electrode active material includes sodium composite transition metal oxide particles having a P2 orthorhombic crystal structure, wherein a ratio of the average particle diameter ($D_{50}$) between the first positive electrode active material and the second positive electrode active material is 2:1 to 3:1.

The current collector according to the present invention is not particularly limited as long as it has conductivity without causing a chemical change in a battery, and for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 $\mu$m to 500 $\mu$m, and microscopic irregularities may be formed on the surface of the current collector to improve the adhesive force of the positive electrode active material. For example, the current collector may be used in various forms such as a film, a sheet, a foil, a net, a porous body, a foam, and a non-woven body.

The first positive electrode active material layer is disposed on the current collector.

The first positive electrode active material layer may be disposed on at least one surface of the current collector. Specifically, the first positive electrode active material layer may be disposed on one surface or both surfaces of the current collector.

The first positive electrode active material layer includes a first positive electrode active material.

The first positive electrode active material includes sodium composite transition metal oxide particles having an O3 octahedral crystal structure.

The O3 octahedral crystal structure refers to a structure of an R3-m space group in which sodium ions are located at an octahedral site. It may be understood that a sodium composite transition metal oxide having the O3 octahedral crystal structure is implemented specifically if the number of moles of sodium is 0.7 to 1 times the total number of moles of a transition metal.

The sodium composite transition metal oxide particles having the O3 octahedral crystal structure have a relatively high initial Na content, and thus, may de-intercalate more sodium ions, and have a high capacity, and thus, are suitable for implementing a positive electrode having a high energy density. In addition, the first positive electrode active material includes the sodium composite transition metal oxide particles having the O3 octahedral crystal structure, and thus, has properties of having a relatively large contact area with the current collector, so that adhesion between the current collector and the entire active material layer may be high. Meanwhile, there is a concern that the sodium composite transition metal oxide particles having the O3 octahedral crystal structure are oxidized when exposed to moisture or $CO_2$ in the atmosphere, and cause a problem of being unstable in the atmosphere, such as intercalation of $H_2O$ or $CO_2$ molecules into a $Na^+$ layer or changes in the surface structure and composition, but the second positive electrode active material layer to be described may cover the first positive electrode active material layer, which may prevent the above-described problem.

More specifically, the sodium composite transition metal oxide particles having the O3 octahedral crystal structure may include a compound represented by Formula 1 below.

$$[Formula\ 1] \qquad Na_{x1}M^1O_2$$

In Formula 1 above, the x1 may be 0.7≤x1≤1, and the $M^1$ may be one or more selected from the group consisting of Fe, Ni, Mn, Co, Mg, Zn, Cu, and Cr.

In Formula 1 above, the x1 refers to a ratio of the molar content of sodium to the total molar content of transition metals in the compound, and may be 0.7≤x1≤1, specifically 0.75≤x1≤1, and more specifically 0.9≤x1≤1. If the atomic fraction of sodium satisfies the above-described range, the formation of the O3 octahedral crystal structure may be facilitated.

In Formula 1 above, the $M^1$ may be one or more selected from the group consisting of Fe, Ni, Mn, Co, Mg, Zn, Cu, and Cr, specifically one or more selected from the group consisting of Fe, Ni, and Mn, and more specifically Fe, Ni, and Mn. In the case of a sodium composite transition metal oxide using the above-described elements as the $M^1$, a cation disorder phenomenon occurs less due to a large difference in the ion radius between sodium ions and metal ions, so that structural stability may be expressed.

More specifically, the compound represented by Formula 1 above may include a compound represented by Formula 1a below.

$$[Formula\ 1a] \qquad Na_{x1}Fe_{y1}Ni_{y2}Mn_{y3}O_2$$

In Formula 1a above, the x1 may be 0.7≤x1≤1, specifically 0.75≤x1≤1, and more specifically 0.9≤x1≤1, and the y1, the y2, and the y3 respectively represent an atomic fraction of Fe, Ni, and Mn in the sodium composite transition metal oxide, and may be 0<y1<1, 0<y2<1, and 0<y3<1, specifically 0.1<y1<0.5, 0.1<y2<0.5, and 0.1<y3<0.5. In this case, it may be that y1+y2+y3=1.

The first positive electrode active material may have an average particle diameter ($D_{50}$) of 1 μm or greater, 5 μm or greater, 6 μm or greater, 8 μm or greater, 9 μm or greater, or 10 μm or greater, and 50 μm or less, 30 μm or less, 17 μm or less, 15 μm or less, 14 μm or less, or 12 μm or less. Specifically, the average particle diameter ($D_{50}$) may be 1 μm to 50 μm, more specifically 6 μm to 17 μm, and even more specifically 10 μm to 12 μm. If the average particle diameter ($D_{50}$) of the first positive electrode active material satisfies the above-described range, the first positive electrode active material layer has a high electrode density, and thus, has a large number of contact points with the current collector, so that there is an effect of facilitating the movement of electrons.

The first positive electrode active material may have a specific surface area of 0.05 m²/g or greater, 0.1 m²/g or greater, 0.15 m²/g or greater, 0.2 m²/g or greater, or 0.4 m²/g or greater, and 20 m²/g or less, 10 m²/g or less, 1.0 m²/g or less, 0.7 m²/g or less, or 0.5 m²/g or less. Specifically, the specific surface area may be 0.05 m²/g to 20 m²/g, more

specifically 0.2 m$^2$/g to 0.7 m$^2$/g, and even more specifically 0.4 m$^2$/g to 0.5 m$^2$/g. If the specific surface area of the first positive electrode active material satisfies the above-described range, the adhesion between the current collector and a layer containing the sodium composite transition metal oxide particles having the O3 octahedral crystal structure may be improved.

The first positive electrode active material layer may have a thickness of 1 $\mu$m or greater, 10 $\mu$m or greater, 20 $\mu$m or greater, or 30 $\mu$m or greater, and may be 500 $\mu$m or less, 300 $\mu$m or less, 100 $\mu$m or less, 70 $\mu$m or less, or 50 $\mu$m or less. Specifically, the thickness may be 1 $\mu$m to 500 $\mu$m, more specifically 10 $\mu$m to 70 $\mu$m, and even more specifically 30 $\mu$m to 50 $\mu$m. When the thickness of the first positive electrode active material layer satisfies the above-described range, the movement of electrons and ions in the first positive electrode active material layer is facilitated, so that optimal electrochemical performance may be exhibited.

The first positive electrode active material layer may further include a first binder and/or a first conductive material together with the first positive electrode active material.

The first conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The first conductive material may be included in an amount of 1 wt% to 30 wt% based on the total weight of the first positive electrode active material layer.

The first binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The first binder may be included in an amount of 1 wt% to 30 wt% based on the total weight of the first positive electrode active material layer.

The second positive electrode active material layer is disposed on the first positive electrode active material layer. Specifically, the second positive electrode active material layer may be disposed on a surface opposite to a surface of the first positive electrode active material layer on which the first positive electrode active material layer and the current collector come into contact.

In addition, if the first positive electrode active material layer is present on both surfaces of the current collector, the second positive electrode active material layer may be disposed on a surface of each of the first positive electrode active material layers disposed on both surfaces of the current collector.

The second positive electrode active material layer according to the present invention includes a second positive electrode active material, and the second positive electrode active material includes sodium composite transition metal oxide particles having a P2 orthorhombic crystal structure.

The P2 orthorhombic crystal structure refers to a structure having a P6$_3$/mmc space group in which sodium ions are located at a large triangular prism site. It may be understood that a sodium composite transition metal oxide having the P2 orthorhombic crystal structure is implemented specifically if the number of moles of sodium is greater than 0 time to less than 0.7 times the total number of moles of a transition metal.

The sodium composite transition metal oxide particles having the P2 orthorhombic crystal structure have a large interlayer distance, which facilitates intercalation and deintercalation of sodium ions, and thus, have excellent high-rate properties, and have a small change in crystal structure during charging and discharging, and thus, have excellent lifespan properties. However, the P2 orthorhombic crystal structure has a low density, and thus, has a disadvantage of having reduced adhesion to the current collector, so that it is preferable to dispose the P2 orthorhombic crystal structure in the second positive electrode active material layer, which is an upper layer portion. In addition, since the P2 orthorhombic crystal structure is disposed in the upper layer portion, thereby covering the O3 octahedral crystal structure which is unstable in the atmosphere, excellent adhesion, rate properties, and lifespan performance may be implemented.

Specifically, the sodium composite transition metal oxide particles having the P2 orthorhombic crystal structure may include a compound represented by Formula 2 below.

$$[\text{Formula 2}] \qquad Na_{x2}M^2O_2$$

In Formula 2 above, the x2 may be 0<x2<0.7, and the M$^2$ may be one or more selected from the group consisting of Fe, Ni, Mn, Co, Mg, Zn, Cu, and Cr.

In Formula 2 above, the x2 refers to a ratio of the molar content of sodium to the total molar content of transition metals in the compound, and may be $0<x2<0.7$, specifically $0.2<x2<0.7$, and more specifically $0.4<x2<0.7$. If the atomic fraction of sodium satisfies the above-described range, the formation of the P2 orthorhombic crystal structure may be facilitated.

In Formula 2 above, the $M^2$ may be one or more selected from the group consisting of Fe, Ni, Mn, Co, Mg, Zn, Cu, and Cr, specifically one or more selected from the group consisting of Fe, Ni, and Mn, and more specifically Fe, Ni, and Mn. In the case of a sodium composite transition metal oxide using the above-described elements as the $M^2$, high ion conductivity, and stable structural change and rate properties during charging and discharging may be exhibited.

More specifically, the compound represented by Formula 2 above may include a compound represented by Formula 2a below.

$$[\text{Formula 2a}] \qquad Na_{x2}Fe_{z1}Ni_{z2}Mn_{z3}O_2$$

In Formula 2a above, the x2 may be $0<x2<0.7$, specifically $0.2<x2<0.7$, and more specifically $0.4<x2<0.7$, and the z1, the z2, and the z3 respectively represent an atomic fraction of Fe, Ni, and Mn in the sodium composite transition metal oxide, and may be $0<z1<1$, $0<z2<1$, and $0<z3<1$, specifically $0.1<z1<0.5$, $0.1<z2<0.5$, and $0.1<z3<0.5$. In this case, it may be that $z1+z2+z3=1$.

The second positive electrode active material may have an average particle diameter ($D_{50}$) of 0.5 $\mu$m or greater, 1 $\mu$m or greater, 2 $\mu$m or greater, 3 $\mu$m or greater, or 4 $\mu$m or greater, and 45 $\mu$m or less, 25 $\mu$m or less, 10 $\mu$m or less, 8 $\mu$m or less, or 5 $\mu$m or less. Specifically, the average particle diameter ($D_{50}$) may be 0.5 $\mu$m to 45 $\mu$m, more specifically 2 $\mu$m to 8 $\mu$m, and even more specifically 4 $\mu$m to 5 $\mu$m. If the average particle diameter ($D_{50}$) of the second positive electrode active material satisfies the above-described range, due to a high ratio of small particles in the second positive electrode active material layer, a sodium ion solid-phase diffusion distance is shorter than that of the first positive electrode active material layer, so that a high-rate discharge effect may be further expressed.

The second positive electrode active material may have a specific surface area of 0.05 m²/g or greater, 0.1 m²/g or greater, 0.2 m²/g or greater, or 0.4 m²/g or greater, and 20 m²/g or less, 10 m²/g or less, 5 m²/g or less, 1 m²/g or less, 0.7 m²/g or less, or 0.6 m²/g or less. Specifically, the specific surface area may be 0.05 m²/g to 20 m²/g, more specifically 0.2 m²/g to 0.7 m²/g, and even more specifically 0.4 m²/g to 0.6 m²/g. If the specific surface area of the second positive electrode active material satisfies the above-described range, the adhesion to the first positive electrode active material layer may be improved.

The second positive electrode active material layer may have a thickness of 0.5 $\mu$m or greater, 2 $\mu$m or greater, 4 $\mu$m or greater, 5 $\mu$m or greater, or 10 $\mu$m or greater, and may be 300 $\mu$m or less, 100 $\mu$m or less, 30 $\mu$m or less, 20 $\mu$m or less, or 15 $\mu$m or less. Specifically, the thickness may be 0.5 $\mu$m to 300 $\mu$m, more specifically 5 $\mu$m to 30 $\mu$m, and even more specifically 10 $\mu$m to 15 $\mu$m. If the thickness of the second positive electrode active material layer satisfies the above-described range, high-rate discharge properties may be improved through facilitated sodium ion diffusion.

The second positive electrode active material layer may further include a second binder and/or a second conductive material together with the second positive electrode active material.

The second conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The second conductive material may be included in an amount of 1 wt% to 30 wt% based on the total weight of the second positive electrode active material layer.

The second binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The second binder may be included in an amount of 1 wt% to 30 wt% based on the total weight of the second positive electrode active material layer.

A ratio of the average particle diameter ($D_{50}$) between the first positive electrode active material and the second positive electrode active material may be 2:1 to 3:1, specifically 2.0:1 to 2.7:1, and more specifically 2.1:1 to 2.4:1. If the ratio is out of the above-described range, an intercalation/deintercalation reaction of sodium ions becomes slow, resulting in degrading output properties of a sodium secondary battery, so that there is a problem of degradation in high-rate properties and capacity retention rate. Therefore, if the ratio of the average particle diameter ($D_{50}$) satisfies the above-described range, adhesion between the first positive electrode active material layer and the second positive electrode active material layer may be improved, and the movement of sodium ions may be optimized to maintain stable performance even during high-rate charging and discharging, so that the high-rate properties and the capacity retention may be improved.

In addition, a weight ratio between the first positive electrode active material and the second positive electrode active material may be 50:50 to 99:1, specifically 60:40 to 99:1, and more specifically 70:30 to 99:1. If the weight ratio satisfies the above-described range, the capacity of a positive electrode is increased, which may improve high-rate properties.

In addition, a thickness ratio between the first positive electrode active material layer and the second positive electrode active material layer may be 1.2:1 to 30:1, specifically 1.2:1 to 6:1, and more specifically 2:1 to 4:1. If the thickness ratio satisfies the above-described range, the movement of electrons and ions between the first positive electrode active material layer and the second positive electrode active material layer is facilitated, so that high-rate properties may be expressed.

In addition, a ratio of the loading amount between the first positive electrode active material layer and the second positive electrode active material layer may be 1.4:1 to 35:1, specifically 2:1 to 7:1, and more specifically 4:1 to 6:1. If the ratio of the loading amount satisfies the above-described range, the adhesive force and the capacity of the positive electrode are increased, which may improve high-rate properties.

The first positive electrode active material layer may be prepared by coating and drying a first positive electrode slurry, which is prepared by dissolving or dispersing a first positive electrode active material, and selectively, a first binder and/or a first conductive material in a solvent, on a current collector, or casting the first positive electrode slurry on a separate support, and then laminating a film obtained by being peeled off from the support on a current collector. The second positive electrode active material layer may also be implemented by preparing a second positive electrode slurry in the same manner as described above, except that a second positive electrode active material, a second binder, and a second conductive material are used.

If the positive electrode active material layer includes the first positive electrode active material layer and the second positive electrode active material layer, the manufacturing of the positive electrode for a sodium secondary battery is not particularly limited as long as it is possible to implement the first positive electrode active material layer and the second positive electrode active material layer which have the above-described properties. For example, the positive electrode for a sodium secondary battery according to the present invention may be manufactured by preparing a first positive electrode slurry by adding a first positive electrode active material, selectively a first binder and/or a first conductive material to a solvent (e.g., NMP), preparing a second positive electrode slurry by adding a second positive electrode active material, selectively a second binder and/or a second conductive material to a solvent (e.g., NMP), and then coating the first positive electrode slurry and the second positive electrode slurry on a current collector. More specifically, the positive electrode for a sodium secondary battery according to the present invention may be manufactured by forming a first positive electrode active material layer by coating, roll-pressing, and drying the first positive electrode slurry prepared above on a current collector, and by forming a second positive electrode active material layer by coating, roll-pressing, and drying the second positive electrode slurry prepared above on the first positive electrode active material layer. Meanwhile, the positive electrode for a sodium secondary battery according to the present invention may also be manufactured by, while coating the first positive electrode slurry on a current collector, substantially simultaneously coating the second positive electrode slurry on the coated first positive electrode slurry, followed by simultaneously roll-pressing and drying.

**Sodium secondary battery**

Next, a sodium secondary battery according to the present invention will be described.

The sodium secondary battery according to the present invention includes the positive electrode for a sodium secondary battery according to the present invention described above. More specifically, the sodium secondary battery according to the present invention includes the positive electrode for a sodium secondary battery according to the present invention, a negative electrode positioned to face the positive electrode for a sodium secondary battery, a separator interposed between the positive electrode for a sodium secondary battery and the negative electrode, and an electrolyte. Since the positive electrode for a sodium secondary battery has been described above, hereinafter, only the rest of the components will be described.

The negative electrode according to the present invention includes a negative electrode current collector and a negative electrode active material layer disposed on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode active material layer selectively includes a binder and a conductive material, together with the negative electrode active material.

As the negative electrode active material, a compound capable of reversible intercalation and de-intercalation of sodium may be used. Specific examples thereof may include a carbonaceous material such as artificial graphite, natural graphite, graphitized carbon fiber, hard carbon, soft carbon, and amorphous carbon; a metallic compound alloyable with sodium, such as Si, Al, Sn, Pb, Zn, Bi, In, Mg, Ga, Cd, an Si alloy, an Sn alloy, or an Al alloy; a metal oxide which may be doped and undoped with sodium, such as $SiO_\beta(0<\beta<2)$, $SnO_2$, a vanadium oxide, and a sodium vanadium oxide; or a composite including the metallic compound and the carbonaceous material, such as an Si-C composite or an Sn-C composite, and any one thereof or a mixture of two or more thereof may be used. In addition, a metal sodium thin film may be used as the negative electrode active material.

The binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene butadiene rubber (SBR), fluorine rubber, or various copolymers thereof, and any one thereof or a mixture of two or more thereof may be used. The binder may be included in an amount of 1 wt% to 30 wt%, specifically 1 wt% to 20 wt%, and more specifically 1 wt% to 10 wt% based on the total weight of the negative electrode active material layer.

The conductive material is used to impart conductivity to the negative electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may typically be included in an amount of 1 wt% to 30 wt%, specifically 1 wt% to 20 wt%, and more specifically 1 wt% to 10 wt% based on the total weight of the negative electrode active material layer.

As an example, the negative electrode active material layer may be prepared by applying a composition for forming a negative electrode active material layer, which is prepared by dissolving or dispersing a negative electrode active material and selectively a binder and a conductive material in a solvent, on a negative electrode current collector, followed by drying, or may be prepared by casting the composition for forming a negative electrode active material layer on a separate support, and then laminating a film peeled off from the support on a negative electrode current collector.

The separator according to the present invention separates a negative electrode and a positive electrode and provides a movement passage for sodium ions, and separators commonly used in a secondary battery may be used, and the type of the separator is not particularly limited. For example, as the separator, a porous polymer film manufactured using a polyolefin-based polymer such as an ethylene homopolymer, a propylene homopolymer, an ethylene/butene copolymer, an ethylene/hexene copolymer, and an ethylene/methacrylate copolymer or a stacked structural body having two or more layers thereof, or a porous non-woven fabric formed of glass fiber having a high melting point, polyethylene terephthalate fiber, or the like may be used. Also, a coated separator including a ceramic component or a polymer material may be used to secure heat resistance or mechanical strength, and may selectively be used in a single-layered or multi-layered structure.

The electrolyte according to the present invention may be an organic liquid electrolyte, an inorganic liquid electrolyte, a solid polymer electrolyte, a gel-type polymer electrolyte, a solid inorganic electrolyte, a molten-type inorganic electrolyte, or the like, which may be used in the manufacturing of a sodium secondary battery, but is not limited thereto.

Specifically, the electrolyte may include an organic solvent and a sodium salt.

Any organic solvent may be used as the organic solvent without particular limitation as long as it may serve as a medium through which ions involved in an electrochemical reaction of the battery may move. Specifically, as the organic solvent, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

The sodium salt may be used without particular limitation as long as it is a compound capable of providing sodium ions used in a sodium secondary battery. Specifically, as the sodium salt, $NaPF_6$, $NaClO_4$, $NaAsF_6$, $NaBF_4$, $NaCF_3SO_3$, $NaB(C_6H_5)_4$, $NaC_4F_9SO_3$, $NaN(C_2F_5SO_3)_2$, $NaN(C_2F_5SO_2)_2$, $NaN(CF_3SO_2)_2$, or the like may be used. It is preferable that the sodium salt is used in a concentration range of 0.1 M to 2.0 M.

In order to improve lifespan properties of a battery, suppress a decrease in battery capacity, improve discharge capacity of the battery, and the like, the electrolyte may further include one or more additives, for example, a halo-alkylene carbonate-based compound such as fluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, and the like. At this time, the additive may be included in an amount of 0.1 wt% to 5 wt% based on the total weight of the electrolyte.

The sodium secondary battery including the positive electrode for a sodium secondary battery according to the present invention as described above may be applied to portable devices such as a mobile phone, a laptop computer, and a digital camera, and to the field of electric vehicles such as a hybrid electric vehicle (HEV).

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

**Examples and Comparative Examples**

**Example 1: Manufacturing of positive electrode for sodium secondary battery**

$NaFe_{0.33}Ni_{0.33}Mn_{0.34}O_2$ having an average particle diameter ($D_{50}$) of 10.7 $\mu$m and a specific surface area of 0.47 $m^2$/g as a first positive electrode active material, a conductive material (carbon black), and a binder (PVdF) were mixed in N-methylpyrrolidone (NMP) at a weight ratio of 96:2:2 to prepare a positive electrode slurry for a first positive electrode active material layer.

$Na_{0.67}Fe_{0.33}Ni_{0.33}Mn_{0.34}O_2$ having an average particle diameter ($D_{50}$) of 4.7 $\mu$m and a specific surface area of 0.5 $m^2$/g as a second positive electrode active material, a conductive material (carbon black), and a binder (PVdF) were mixed in N-methylpyrrolidone (NMP) at a weight ratio of 96:2:2 to prepare a positive electrode slurry for a second positive electrode active material layer.

On a 20 $\mu$m aluminum foil as a current collector, the positive electrode slurry for a first positive electrode active material layer was coated, and then dried in a vacuum oven at 120 °C for 1 hour to form the first positive electrode active material layer. On the first positive electrode active material layer, the positive electrode slurry for a second positive electrode active material layer was coated, and then dried in a vacuum oven at 120 °C for 1 hour to form the second positive electrode active material layer.

Thereafter, the resultant was dried in a vacuum oven at 120 °C for 12 hours, and then roll-pressed to manufacture a positive electrode for a sodium secondary battery. Finally, the positive electrode for a sodium secondary battery in which the current collector, the first positive electrode active material layer, and the second positive electrode active material layer were sequentially disposed was manufactured.

In this case, the first positive electrode active material layer had a thickness of 40 $\mu$m, and a loading amount of 1.67 mAh/cm$^2$, and the second positive electrode active material layer had a thickness of 13 $\mu$m, and a loading amount of 0.33 mAh/cm$^2$.

**Example 2: Manufacturing of positive electrode for sodium secondary battery**

A positive electrode for a sodium secondary battery was manufactured in the same manner as in Example 1, except that $NaFe_{0.33}Ni_{0.33}Mn_{0.34}O_2$ having an average particle diameter ($D_{50}$) of 12.6 $\mu$m and a specific surface area of 0.40 $m^2$/g was used.

**Comparative Example 1: Manufacturing of positive electrode for sodium secondary battery**

A positive electrode for a sodium secondary battery was manufactured in the same manner as in Example 1, except that only the first positive electrode active material layer was formed without separately forming the second positive electrode active material layer, to finally manufacture the positive electrode for a sodium secondary battery in which the current collector and the first positive electrode active material layer were sequentially disposed.

**Comparative Example 2: Manufacturing of positive electrode for sodium secondary battery**

A positive electrode active material, which was prepared by mixing $NaFe_{0.33}Ni_{0.33}Mn_{0.34}O_2$ having an average particle diameter ($D_{50}$) of 10.7 $\mu$m and a specific surface area of 0.47 m$^2$/g as a first positive electrode active material, and $Na_{0.67}Fe_{0.33}Ni_{0.33}Mn_{0.34}O_2$ having an average particle diameter ($D_{50}$) of 4.7 $\mu$m and a specific surface area of 0.5 m$^2$/g as a second positive electrode active material at a weight ratio of 5:1, was mixed with a conductive material (carbon black), and a binder (PVdF) in N-methylpyrrolidone (NMP) at a weight ratio of 96:2:2 to prepare a positive electrode slurry.

On a 20 $\mu$m aluminum foil as a current collector, the positive electrode slurry was coated, and dried in a vacuum oven at 120 °C for 12 hours and then roll-pressed to manufacture a positive electrode for a sodium secondary battery. Finally, the positive electrode for a sodium secondary battery in which the current collector and a positive electrode active material layer were sequentially disposed was manufactured.

In this case, the positive electrode active material layer had a thickness of 50 $\mu$m and a loading amount of 2 mAh/cm$^2$.

**Comparative Example 3: Manufacturing of positive electrode for sodium secondary battery**

A positive electrode for a sodium secondary battery was manufactured in the same manner as in Example 1, except that $Na_{0.67}Fe_{0.33}Ni_{0.33}Mn_{0.34}O_2$ having an average particle diameter ($D_{50}$) of 4.7 $\mu$m and a specific surface area of 0.5 m$^2$/g was used as a first positive electrode active material, and $NaFe_{0.33}Ni_{0.33}Mn_{0.34}O_2$ having an average particle diameter ($D_{50}$) of 10.7 $\mu$m and a specific surface area of 0.47 m$^2$/g was used as a second positive electrode active material.

In this case, the first positive electrode active material layer had a thickness of 13 $\mu$m, and a loading amount of 0.33 mAh/cm$^2$, and the second positive electrode active material layer had a thickness of 40 $\mu$m, and a loading amount of 1.67 mAh/cm$^2$.

**Comparative Example 4: Manufacturing of positive electrode for sodium secondary battery**

A positive electrode for a sodium secondary battery was manufactured in the same manner as in Example 1, except that $NaFe_{0.33}Ni_{0.33}Mn_{0.34}O_2$ having an average particle diameter ($D_{50}$) of 17.6 $\mu$m and a specific surface area of 0.34 m$^2$/g was used.

**Comparative Example 5: Manufacturing of positive electrode for sodium secondary battery**

A positive electrode for a sodium secondary battery was manufactured in the same manner as in Example 1, except that $NaFe_{0.33}Ni_{0.33}Mn_{0.34}O_2$ having an average particle diameter ($D_{50}$) of 5.2 $\mu$m and a specific surface area of 0.58 m$^2$/g was used.

**Experimental Example 1: Evaluation of rate properties**

**<Manufacturing of coin half-cell>**

A separator (glass fiber, Whatman Co., Ltd.) was interposed between the positive electrode for a sodium secondary battery manufactured in each of Examples 1 and 2 and Comparative Examples 1 to 5 and a negative electrode (Na metal), and an electrolyte solution was injected thereto to manufacture a coin half-cell of each of Examples and Comparative Examples.

The electrolyte solution used was prepared by adding, to a non-aqueous electrolyte solution solvent in which ethylene carbonate (EC) and propylene carbonate (PC) were mixed at a volume ratio of 5:5, fluoroethylene carbonate (FEC) in an amount of 2 wt% with respect to the solvent, and then dissolving 1 M of $LiPF_6$ therein.

**<Evaluation of high-rate properties>**

The coin half-cell including the positive electrode for a sodium secondary battery manufactured in each of Examples 1 and 2 and Comparative Examples 1 to 5, which were manufactured above, was evaluated for high-rate properties.

Specifically, the coin half-cell was charged to 4.0 V (end current of 0.05 C) with a constant current of 0.1 C at 25 °C in a CC/CV mode, and then discharged to 2.0 V with a constant current of 0.1 C and 5.0 C, respectively, to measure a discharge capacity, and then a ratio of the 5 C discharge capacity to the 0.1 C discharge capacity was calculated.

The calculation results are shown in Table 1 below.

**Experimental Example 2: Evaluation of capacity retention rate**

A coin half-cell including the positive electrode for a sodium secondary battery manufactured in each of Examples 1 and 2 and Comparative Examples 1 to 5, which were manufactured above, was evaluated for a capacity retention rate.

Specifically, the coin half-cell was charged to 4.0 V (end current of 0.1 C) with a constant current of 1 C at 25 °C in a CC/CV mode, and then discharged to 2.0 V with a constant current of 1 C, the whole process of which was set to one cycle, and 100 cycles of charging and discharging were performed.

The capacity retention rate was calculated by the following equation, and the calculation results are shown in Table 1 below.

Capacity retention rate [%] = {(Discharge capacity after 100 cycles / Discharge capacity after 1 cycle)} $\times$ 100

[Table 1]

| | Experimental Example 1 | | | Experimental Example 2 |
|---|---|---|---|---|
| | 5.0 C discharge capacity [mAh/g] | 1.0 C discharge capacity [mAh/g] | 5.0 C discharge capacity / 0.1 C discharge capacity [%] | Capacity retention ratio [%] |
| Example 1 | 123.5 | 139.1 | 88.8 | 96.5 |
| Example 2 | 123.1 | 138.0 | 89.2 | 96.0 |
| Comparative Example 1 | 113.4 | 139.7 | 81.2 | 90.1 |
| Comparative Example 2 | 116.8 | 136.5 | 85.6 | 90.1 |
| Comparative Example 3 | 112.3 | 135.9 | 82.6 | 89.9 |
| Comparative Example 4 | 107.7 | 137.9 | 78.1 | 90.4 |
| Comparative Example 5 | 113.8 | 137.0 | 83.1 | 88.5 |

Referring to Table 1 above, it can be seen that the coin half-cells including the positive electrode for a sodium secondary battery manufactured in each of Examples 1 and 2 are better in rate properties and capacity retention rate than the coin half-cells including the positive electrode for a sodium secondary battery manufactured in each of Comparative Examples 1 to 5.

[Description of the Reference Numerals or Symbols]

10: Positive electrode for sodium secondary battery

100: Current collector

110: First positive electrode active material layer

120: Second positive electrode active material layer

**Claims**

1.    A positive electrode for a sodium secondary battery, the positive electrode comprising:

a current collector;
a first positive electrode active material layer disposed on the current collector; and
a second positive electrode active material layer disposed on the first positive electrode active material layer, wherein:

the first positive electrode active material layer includes a first positive electrode active material; and
the second positive electrode active material layer includes a second positive electrode active material, wherein:
the first positive electrode active material includes sodium composite transition metal oxide particles having an O3 octahedral crystal structure; and the second positive electrode active material includes sodium composite transition metal oxide particles having a P2 orthorhombic crystal structure, wherein a ratio of the average particle diameter ($D_{50}$) between the first positive electrode active material and the second positive electrode active material is 2:1 to 3:1.

2. The positive electrode for a sodium secondary battery of claim 1, wherein the sodium composite transition metal oxide particles having an O3 octahedral crystal structure comprise a compound represented by Formula 1 below:

[Formula 1]     $Na_{x1}M^1O_2$

wherein in Formula 1 above, $0.7 \leq x1 \leq 1$, and $M^1$ is one or more selected from the group consisting of Fe, Ni, Mn, Co, Mg, Zn, Cu, and Cr.

3. The positive electrode for a sodium secondary battery of claim 2, wherein the $M^1$ comprises Fe, Ni, and Mn.

4. The positive electrode for a sodium secondary battery of claim 1, wherein the sodium composite transition metal oxide particles having a P2 orthorhombic crystal structure comprise a compound represented by Formula 2 below:

[Formula 2]     $Na_{x2}M^2O_2$

wherein in Formula 2 above, $0 < x2 < 0.7$, and $M^2$ is one or more selected from the group consisting of Fe, Ni, Mn, Co, Mg, Zn, Cu, and Cr.

5. The positive electrode for a sodium secondary battery of claim 4, wherein the $M^2$ comprises Fe, Ni, and Mn.

6. The positive electrode for a sodium secondary battery of claim 1, wherein the first positive electrode active material has an average particle diameter ($D_{50}$) of 6 $\mu$m to 17 $\mu$m.

7. The positive electrode for a sodium secondary battery of claim 1, wherein the second positive electrode active material has an average particle diameter ($D_{50}$) of 2 $\mu$m to 8 $\mu$m.

8. The positive electrode for a sodium secondary battery of claim 1, wherein a weight ratio between the first positive electrode active material and the second positive electrode active material is 70:30 to 99:1.

9. The positive electrode for a sodium secondary battery of claim 1, wherein the first positive electrode active material has a specific surface area of 0.2 $m^2$/g to 0.7 $m^2$/g.

10. The positive electrode for a sodium secondary battery of claim 1, wherein the second positive electrode active material has a specific surface area of 0.2 $m^2$/g to 0.7 $m^2$/g.

11. The positive electrode for a sodium secondary battery of claim 1, wherein a thickness ratio between the first positive electrode active material layer and the second positive electrode active material layer is 1.2:1 to 6:1.

12. The positive electrode for a sodium secondary battery of claim 1, wherein the first positive electrode active material layer has a thickness of 10 $\mu$m to 70 $\mu$m.

13. The positive electrode for a sodium secondary battery of claim 1, wherein the second positive electrode active material layer has a thickness of 5 $\mu$m to 30 $\mu$m.

14. The positive electrode for a sodium secondary battery of claim 1, wherein a ratio of the loading amount between the first positive electrode active material layer and the second positive electrode active material layer is 2:1 to 7:1.

15. A sodium secondary battery comprising the positive electrode for a sodium secondary battery of claim 1.

FIG. 1

10

120

110

100

## INTERNATIONAL SEARCH REPORT

| International application No. |
|---|
| **PCT/KR2024/020837** |

### A. CLASSIFICATION OF SUBJECT MATTER

**H01M 4/131**(2010.01)i; **H01M 4/505**(2010.01)i; **H01M 4/525**(2010.01)i; **H01M 10/054**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 10/052(2010.01); H01M 10/054(2010.01); H01M 10/42(2006.01); H01M 4/13(2010.01); H01M 4/36(2006.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 소듐 이차 전지 (sodium secondary battery), 양극 활물질 (cathode active material), O3 팔면체 결정 구조 (O3 octahedral crystal structure), P2 사방정계 결정 구조 (P2 orthorhombic crystal structure), 입경 (particle size), 비표면적 (surface area), 두께 (thickness), 로딩 (loading), 중량비 (weight ratio)

### C. DOCUMENTS CONSIDERED TO BE RELEVANT

| Category* | Citation of document, with indication, where appropriate, of the relevant passages | Relevant to claim No. |
|---|---|---|
| Y | CN 115395116 B (PHYLION BATTERY CO., LTD.) 20 January 2023 (2023-01-20)<br>See claims 1, 2, 4, 5 and 9; and paragraphs [0018], [0019], [0041], [0042], [0053] and [0073]. | 1-15 |
| Y | KR 10-2017-0042281 A (SUMITOMO ELECTRIC INDUSTRIES, LTD.) 18 April 2017 (2017-04-18)<br>See claims 1 and 6-8; and paragraphs [0055]-[0057]. | 1-15 |
| Y | KR 10-2022-0010999 A (SK ON CO., LTD.) 27 January 2022 (2022-01-27)<br>See claims 1, 12 and 14; and paragraphs [0096], [0100] and [0105]. | 1-15 |
| Y | KR 10-2021-0062637 A (HALDOR TOPSOE A/S) 31 May 2021 (2021-05-31)<br>See claims 1, 7, 8 and 11; and paragraph [0029]. | 9,10 |
| A | JP 2022-503995 A (HYDRO-QUEBEC) 12 January 2022 (2022-01-12)<br>See abstract; and claims 1-10. | 1-15 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 March 2025** | **28 March 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/020837**

| Patent document cited in search report | | | Publication date (day/month/year) | Patent family member(s) | | | Publication date (day/month/year) |
|---|---|---|---|---|---|---|---|
| CN | 115395116 | B | 20 January 2023 | CN | 115395116 | A | 25 November 2022 |
| KR | 10-2017-0042281 | A | 18 April 2017 | CN | 106575744 | A | 19 April 2017 |
| | | | | CN | 106575744 | B | 12 April 2019 |
| | | | | JP | 6477708 | B2 | 06 March 2019 |
| | | | | US | 10270104 | B2 | 23 April 2019 |
| | | | | US | 2017-0222228 | A1 | 03 August 2017 |
| | | | | WO | 2016-021405 | A1 | 25 May 2017 |
| | | | | WO | 2016-021405 | A1 | 11 February 2016 |
| KR | 10-2022-0010999 | A | 27 January 2022 | CN | 113964299 | A | 21 January 2022 |
| | | | | EP | 3944366 | A1 | 26 January 2022 |
| | | | | US | 2022-0020984 | A1 | 20 January 2022 |
| KR | 10-2021-0062637 | A | 31 May 2021 | AU | 2019-353661 | A1 | 22 April 2021 |
| | | | | CN | 112689614 | A | 20 April 2021 |
| | | | | EP | 3860952 | A1 | 11 August 2021 |
| | | | | JP | 2022-549390 | A | 25 November 2022 |
| | | | | US | 2021-0331938 | A1 | 28 October 2021 |
| | | | | WO | 2020-069935 | A1 | 09 April 2020 |
| JP | 2022-503995 | A | 12 January 2022 | CA | 3112163 | A1 | 09 April 2020 |
| | | | | CN | 112913052 | A | 04 June 2021 |
| | | | | EP | 3861579 | A1 | 11 August 2021 |
| | | | | EP | 3861579 | A4 | 06 July 2022 |
| | | | | KR | 10-2021-0062701 | A | 31 May 2021 |
| | | | | US | 2022-0052330 | A1 | 17 February 2022 |
| | | | | WO | 2020-069618 | A1 | 09 April 2020 |

Form PCT/ISA/210 (patent family annex) (July 2022)

**REFERENCES CITED IN THE DESCRIPTION**

**Patent documents cited in the description**

- KR 1020230187456

- KR 1020240191928